# EUROPEAN PATENT SPECIFICATION

(11) **EP 1 232 072 B1**
(45) Date of publication and mention of the grant of the patent: **21.04.2010**
(21) Application number: 00989672.1
(22) Date of filing: 20.10.2000
(51) Int. Cl.: B60Q 1/26, B60R 1/12

(54) **VEHICLE SIDE MIRROR ASSEMBLY WITH INTEGRAL ILLUMINATION AND SIGNAL LIGHTING**
SEITENSPIEGELEINRICHTUNG MIT BELEUCHTUNG UND SIGNALLEUCHTEN FÜR FAHRZEUGE
RETROVISEUR AUTOMOBILE LATERAL AVEC ECLAIRAGE INTEGRAL ET ECLAIRAGE DE SIGNALISATION

(30) Priority: 21.10.1999 US 160789 P
(43) Date of publication of application: 21.08.2002
(73) Proprietor: FEDERAL-MOGUL CORPORATION, Southfield Michigan 48034 (US)
(72) Inventor: HULSE, George Robert, Cookeville, TN 38506 (US); BROWN, John Christopher, Cookeville, TN 38501 (US)
(74) Representative: Barker, Rosemary Anne
(86) International application number: PCT/US2000/041399
(87) International publication number: WO 2001/028815

(56) References cited:
- US-A- 4 274 078
- US-A- 5 371 659
- US-A- 5 548 492

## Description

### TECHNICAL FIELD

The present invention relates generally to vehicle exterior illumination and signaling and, more particularly, to the incorporation of exterior illumination and signaling into the vehicle side mirrors and appliques.

### BACKGROUND OF THE INVENTION

Side mirror assemblies have now been used for many years to provide exterior illumination and signal lighting. Typically, this is accomplished by mounting an incandescent lamp within the mirror housing itself and then routing electrical power to the lamp through the mirror housing and into the door panel. Sometimes, these side mirror assemblies utilize breakaway mirrors pivotally mounted on a support arm (often called an applique), in which case the power is routed through the pivotal connection to the applique and then into the door panel. See, for example, the following U.S. Patents: 4,583,155 to Hart; 4,661,800 to Yamazaki; 5,109,214 to Heidman, Jr.; 5,497,306 to Pastrick; and 5,774,283 to Nagel et al. It is also known to mount a lamp into the applique itself, with the lamp directly providing area illumination from the applique. See, for example, the Japanese patent document 62-218248 to Satoshi and the German patents DE 36 35 471 and DE 36 35 473 to Deicke and Ball, respectively.

To provide the best perspective for area illumination from these side mirror mounted lamps, it is desirable that they be mounted as far out on the side mirror as possible. However, doing so exposes them to various environmental hazards, including increased vibration which can reduce the lift of the lamp. Thermal management of the lamps can also be difficult in such arrangements. Accordingly, there is a need for a side mirror assembly which provides illumination and/or signal lighting from an outboard location on the mirror assembly, while avoiding some of the disadvantages of locating the lamp at that same location.

US 4,274,078 describes an assembly which includes a mirror body for holding a mirror and at least one container for holding an indicator. The container includes a window portion under an opening formed in the mirror body within which the mirror is disposed. The mirror body is mounted to a portion of an automobile within a visible region of a driver so that the driver can easily recognise the indication produced by the indicator. The illumination of the indicator may be provided by an optical waveguide routed through the mirror body.

### SUMMARY OF THE INVENTION

In accordance with the invention, there is provided a side mirror assembly as described in the appended claims.

The waveguide can be used to provide area illumination from the side mirror assembly, or to provide brake or turn signal lighting. In accordance with another aspect of the invention, a stacked waveguide arrangement can be used so that these multiple lighting functions can be incorporated together into the mirror assembly.

In accordance with another aspect of the invention, the mounting member comprises a mirror mount or applique that supports a separate housing containing the mirror, with the waveguide extending through the mirror mount and being optically coupled to a second waveguide that then routes the light to an outboard location in the mirror housing. When used on a breakaway side mirror assembly of the type that allows the mirror to pivot relative to the mirror mount, the optical coupling can be located such that at least a portion of the light couples between the waveguides regardless of the relative pivotal position of the mirror and mirror mount. For this purpose, semi-circular reflective surfaces on the two waveguides can be used to maintain good optical coupling regardless of the pivotal position of the mirror.

### BRIEF DESCRIPTION OF THE DRAWINGS

Preferred exemplary embodiments of the invention will hereinafter be described in conjunction with the appended drawings, wherein like numerals denote like elements, and wherein:
Fig. 1 is a partially diagrammatic view of a first embodiment of the invention, showing a side mirror, applique, and illumination assembly as it might be used for rearwardly directed illumination or signaling;
Fig. 2A is a partially diagrammatic and partially perspective view of the waveguide used in the illumination assembly shown in Fig. 1;
Fig. 2B is an end perspective view of the waveguide of Fig. 2A with its end being aluminized to minimize light loss;
Fig. 3 is an elevational view of a first alternative embodiment of the applique used with the illumination assembly of Fig. 1;
Fig. 4 is a perspective view of an alternative embodiment of the waveguide shown in Fig. 2A;
Fig. 5 is a partially diagrammatic view of a second embodiment of the invention, showing a side mirror, applique, and illumination assembly as it might be used for both downwardly and rearwardly directed illumination;
Fig. 6 is a partially diagrammatic view of a third embodiment of the invention, showing a side mirror, applique, and illumination assembly as it might be used for both downwardly and rearwardly directed illumination;
Fig. 7A is a perspective view of the waveguide used in the illumination assembly shown in Fig. 6;
Fig. 7B is a top view of the waveguide of Fig. 7A;
Fig. 7C is an end view of the waveguide of Fig. 7A;
Fig. 8A is a perspective view of the first alternative embodiment of the waveguide of Fig. 7A;
Fig. 8B is a partial top view of the waveguide of Fig. 8A;
Fig. 9 is a partial top view of a second alternative embodiment of the waveguide of Fig. 7A;
Fig. 10 is a partial top view of a third alternative embodiment of the waveguide of Fig. 7A;
Fig. 11 is an end view of a fourth alternative embodiment of the waveguide of Fig. 7A;
Fig. 12 is an end view of a fifth alternative embodiment of the waveguide of Fig. 7A;
Fig. 13 is a partially diagrammatic view of a fourth embodiment of the invention, showing a breakaway side mirror, applique, and illumination assembly as it might be used in the breakaway mirror to provide rearwardly directed illumination or signaling from the side mirror housing;
Fig. 14A is a perspective view of the upper and lower waveguides used in illumination assembly shown in Fig. 13;
Fig. 14B is a top view of the waveguides of Fig. 14A;
Fig. 14C is a side view of the waveguides of Fig. 14A;
Fig. 14D is an enlarged, fragmentary side view of the waveguide of Fig. 14A, showing how light rays are optically coupled from the lower waveguide to the upper waveguide;
Fig. 15A is a perspective view of the waveguides of Fig. 14A, depicting the optical coupling between the upper and lower waveguides when the upper waveguide is rotated relative to the lower waveguide;
Fig. 15B is a top view of the waveguides of Fig. 14A when the upper waveguide is in the rotated position shown in Fig. 15A;
Fig. 16 is a side view of a first alternative embodiment of the waveguides of Fig. 14A which provides improved optical coupling between the upper and lower waveguides;
Figs. 17-19 depict different single and compound angled end faces that can be used on the waveguides disclosed herein to control the shape and direction of light exiting the waveguide;
Fig. 20A is a perspective view of an alternative embodiment of the waveguides of Fig. 14A;
Fig. 20B is a top view of the waveguides of Fig. 20A;
Fig. 20C is a side view of the waveguide of Fig. 20A;
Fig. 21A is a perspective view of the waveguides of Fig. 20A, depicting the optical coupling between the upper and lower waveguides when the upper waveguide is rotated relative to the lower waveguide;
Fig. 21B is a top view of the waveguides of Fig. 20A when the upper waveguide is in the rotated position shown in Fig. 21A;
Fig. 22 is an elevational view of a second alternative embodiment of the applique used in the side mirror assembly of Fig. 1, showing stacked waveguides for providing brake signaling, turn signaling, and area illumination;
Fig. 23 is a partially diagrammatic and partially perspective view of the stacked waveguides shown in Fig. 22;
Fig. 24 is a perspective view of an alternative embodiment of the waveguides used in the illumination assembly depicted in Fig. 13, showing stacked waveguides as they might be used in a breakaway side mirror for providing brake signaling, turn signaling, and area illumination;
Fig. 25 is a partially exploded, perspective view of the stacked waveguides of Fig. 24, showing the outer waveguides rotated relative to the inner waveguides;
Fig. 26 is a perspective view of an alternative embodiment of the illumination assembly of Fig. 1; and
Fig. 27 is a partially diagrammatic view showing how the illumination assembly of Fig. 26 can be incorporated into the applique of Fig. 1.

### DETAILED DESCRIPTION OF THE PREFERRED EMBODIMENTS

As used herein, and except where the context otherwise obviously requires, directional terms such as upper, lower, downward, forward, front, rear, and outboard all refer to the directions that the associated component or assembly takes on when the invention is incorporated into its intended application on a vehicle.

### Rear/Side Illumination and Signaling from the Applique

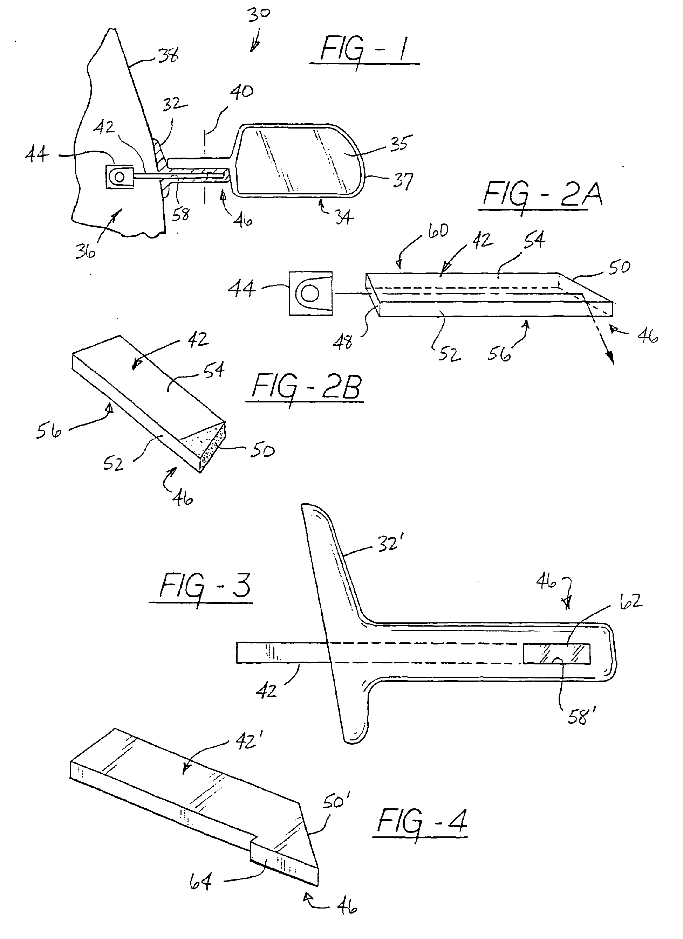

Fig. 1 depicts a side mirror assembly 30 for a vehicle. The assembly includes a mirror mount or applique 32, a breakaway side mirror 34, and an illumination assembly 36 which provides rearwardly directed light that can be used for purposes of illumination along the side of the vehicle or as a turn signal indicator for pedestrians and other motorists. Applique 32 is mounted on the vehicle door panel 38 or to some other side body panel and is used to support side mirror 34 such that it can rotate about an axis 40 to thereby help protect the laterally extending side mirror 34 from damage. As shown, side mirror 34 includes both a mirror or other reflective element 35 and a mirror housing 37, with the mirror 35 being mechanically or electrically positionable within housing 37. Although Fig. 1 and the other various embodiments discussed herein are directed to a side mirror assembly having a breakaway mirror, it will of course be appreciated that the side mirror can be rigidly mounted to the vehicle via the applique or can be directly mounted to the vehicle without the use of a separate applique. Thus, either the applique or mirror housing can be utilized as a mounting member for the mirror. Moreover, it will be appreciated that the various views of the different illustrated embodiments of the side mirror assembly and its component parts are primarily for purposes of depicting the various features of those embodiments. The actual dimensions, shapes, and configurations of any manufactured assembly incorporating the invention may vary significantly from that illustrated in the appended drawings, depending upon the stylistic, spatial, and functional considerations involved in a particular application.

Extending from the door panel 38 into applique 32 is a waveguide 42 that is used to route light from a standard T5 illuminator 44 located in door panel 38 to an outboard location 46 near the free end of applique 32. Preferably, waveguide 42 is a plastic component that can be injection molded or extruded and then post-processed to the desired configuration. Illuminator 44 can be any desired light source, including an incandescent lamp, HID lamp, or LED. Referring now also to Fig. 2A, light from illuminator 44 enters a first longitudinal end 48 of waveguide 42, travels to an opposing, angled, longitudinal end 50 where it is reflected such that it exits waveguide 42 through a lateral side 52. As shown in Fig. 2B, longitudinal end 50 can be aluminized or otherwise coated with a reflective surface to maximize the reflection of light out through lateral side 52. Also, the upper and lower surfaces 54, 56 of waveguide 42 can be similarly aluminized or coated at its outboard location 46 proximate longitudinal end 50. Alternatively, upper and lower surfaces 54, 56 can be bead blasted and painted white at these locations.

Referring back to Fig. 1, applique 32 includes a slot 58 on its rearward side. This slot can extend from the interface of applique 32 with door panel 38 all the way to the outboard location 46 such that the lateral side 52 of waveguide 42 is exposed along a substantial portion of its length. If desired, waveguide 42 can be constructed such that light is emitted rearwardly along the entire length of slot 58. This can be accomplished by placing notches or other surface features (not shown) on the lateral side 52 of waveguide 42 or on the opposing lateral side 60, as will be appreciated by those skilled in the art. Alternatively, as shown in the embodiment of Fig. 3, slot 58' can be located only at the outboard location 46 and can be covered by a lens or window 62 such that waveguide 42 is entirely housed within applique 32'. Moreover, rather than using lens 62, a waveguide 42' can be used as shown in Fig. 4, which includes a laterally extending portion 64 at its outboard location 46 that extends rearward into slot 58' such that the surface of portion 64 is flush with the outer surface of applique 32'.

As will be appreciated, the waveguides 42 and 42' of the embodiments shown in Figs. 1-4 can be used either to provide area illumination along the side of the vehicle or to provide a turn signal or brake signal to pedestrians or other motorists. When used for providing illumination, illuminator 44 can be connected to the vehicle lighting system or an electronic control module, with illuminator 44 being activated concurrently with other vehicle interior or exterior lights. For example, illuminator 44 can be interconnected with the vehicle lighting system such that illuminator 44 is energized in response to the vehicle receiving a door unlock signal from a remote transmitter (not shown). Alternatively, illuminator 44 could also be activated in response to detection of an active or passive transponder. Optionally, illuminator 44 can be activated in response to a signal from a vehicle alarm system and can be activated in either a steady-state or flashing mode when the alarm is tripped, or can be pulsed one or more times to acknowledge arming or disarming of the alarm system. Also, when used for vehicle exterior illumination, the direction and/or intensity of the light emitted from the waveguides 42, 42' can be controlled or varied as desired. For example, waveguides 42, 42' can be used to provide light directed rearwardly along the side of the vehicle toward the vehicle door handle(s) and/or toward the rear wheel well.

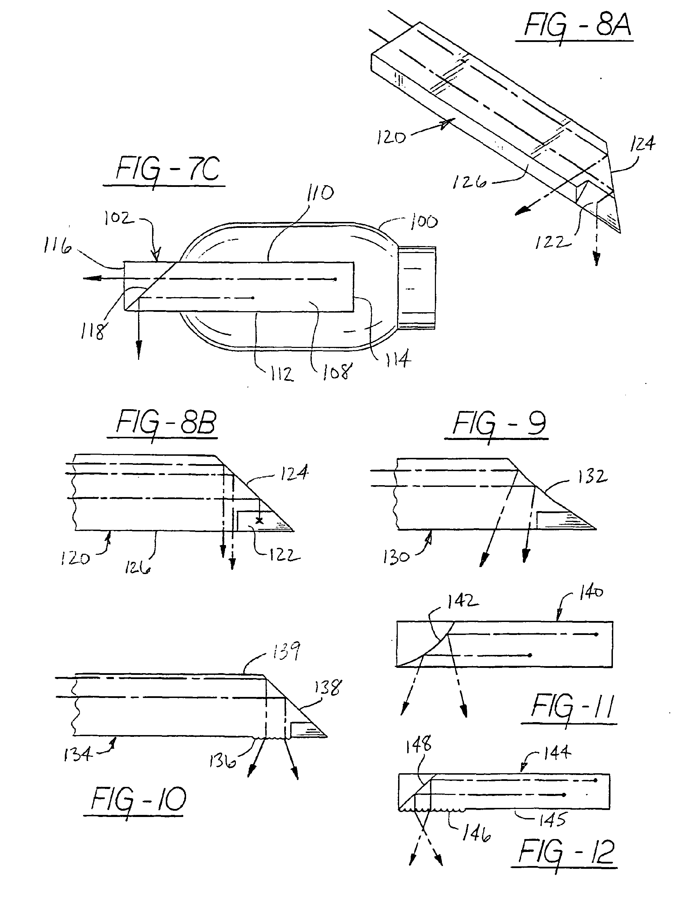

When used for providing signaling to pedestrians and other motorists, illuminator 44 can be interconnected with the vehicle's turn signal and/or brake signal system so that illuminator 44 is activated concurrently with the vehicle's rear turn signal or brake lights. Also, light from illuminator 44 can be filtered such that the light exiting the waveguides 42, 42' will be suitably colored. For example, when used as a side-mounted turn signal, an amber filter (not shown) can be interposed between illuminator 44 and the waveguide 42 or 42' so that pedestrians and other motorists would see an amber flashing light upon activation by the driver of the turn signal lever. Similarly, when used to signal braking of the vehicle, a red filter (also not shown) can be interposed between illuminator 44 and the waveguide 42 or 42' so that a red warning light is seen upon application of the brakes by the driver. Of course, filtering of the light can be accomplished in other ways. For example, waveguides 42, 42' can be made from a suitably colored translucent plastic. Furthermore, the shape and angle of the longitudinal ends 50, 50' of the waveguides can be selected as will be discussed further below in connection with Figs. 9, 10, and 17-19 to thereby control the direction of light exiting the waveguide so that, for example, the light can be directed both rearwardly and laterally away from the vehicle and, consequently, away from the vehicle's driver and occupants.

Before describing the remaining embodiments in detail, several advantages of the side mirror assembly and components shown in Figs. 1-4 are worth noting. By routing light from door panel 38 into the side mirror assembly 30, the present invention avoids the necessity of locating a floodlight or other incandescent light source or illuminator within the applique or side mirror housing. This provides significant advantages since it reduces the room needed within the applique or mirror housing for the illumination system and eliminates wiring and heating problems caused by the use of incandescent lamps within the applique or mirror housing. Also, less weight is added to the side mirror which reduces mirror vibration concerns. The bulb used by the illuminator can also be better protected within the door panel from vibration and other environmental effects. If desired, the light provided to the waveguides 42, 42' can be routed from a remote location rather than from an illuminator located just inside the surface of the door panel at applique 22. In this regard, the light used by waveguides 42, 42' can originate at a central illuminator located either in the door panel or at some other remote location. This permits the invention to be used with an existing illuminator that supplies other vehicle lighting needs, in which case an LCD baffle or other optical device (not shown) can be interposed between the illuminator and waveguide 42, 42' to block light from the illuminator when it is energized for other purposes. As will be appreciated, the foregoing design considerations and advantages also apply to the additional embodiments described below.

### Rear/Side/Ground Illumination and Signaling from the Applique

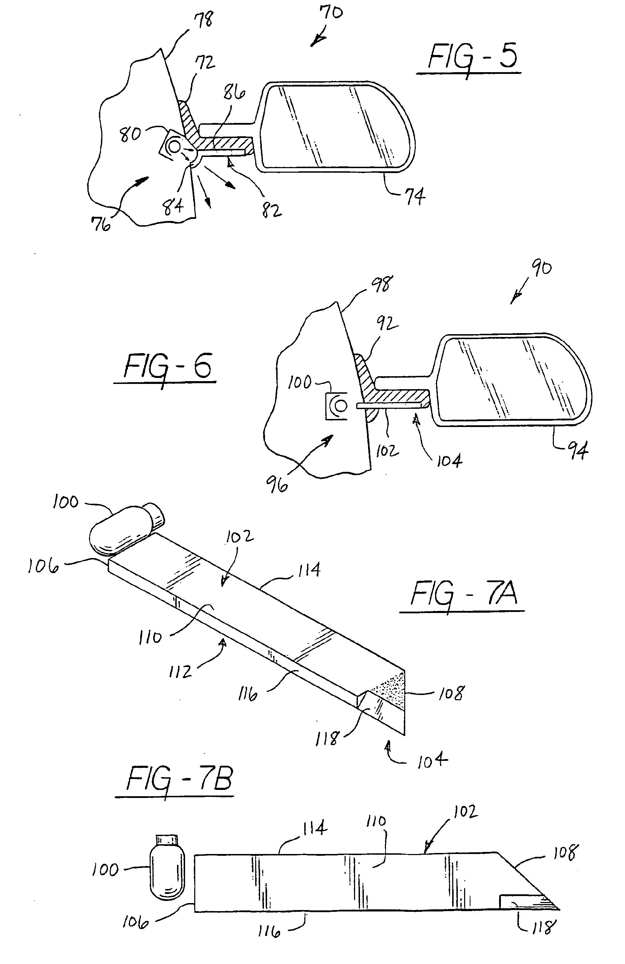

Referring now to Fig. 5, there is shown a second embodiment 70 of a side mirror assembly of the present invention. Side mirror assembly 70 includes an applique 72, side mirror 74, and illumination assembly 76 that provides both rearwardly and downwardly directed light for purposes of illuminating the area alongside the vehicle. As in the first embodiment, applique 72 is used to mount side mirror 74 to either the vehicle door panel 78 or to another side body panel. The illumination assembly 76 includes an illuminator 80 and waveguide 82 that can form a portion of the lower surface of applique 72. In particular, waveguide 82 includes a curved lens portion 84 and a planar portion 86, with the curved portion 84 providing downwardly directed general-purpose illumination and the planar portion 86 having an angled longitudinal end (as shown in Fig. 2A) that provides rearwardly directed illumination. Waveguide 82 can either form all or a portion of the lower surface of applique 72 or can be located internally behind a suitable opening formed within the applique.

Fig. 6 depicts a third embodiment 90 of a side mirror assembly of the present invention. Side mirror assembly 90 includes an applique 92, side mirror 94, and illumination assembly 96 that provides both rearwardly and downwardly directed light. The applique 92 is used to mount side mirror 94 to either the vehicle door panel 98 or to another side body panel. Illumination assembly 96 includes an illuminator 100 and a waveguide 102 that provides both rearward and downwardly directed illumination, as will be described below in more detail in connection with Figs. 7A - 7C. Waveguide 102 extends along the lower portion of applique 92 and can either form a part of the lower housing of applique 92 or can be contained wholly within applique 92, in which case the applique can have an opening (preferably covered by a transparent window or lens) on both its rearward and lower surfaces at the outboard location 104 to thereby permit the light from waveguide 102 to exit in both the rearward and downward directions.

Referring now to Figs. 7A-7C, further details of waveguide 102 are shown. Waveguide 102 comprises an elongated, unitary piece of transparent plastic extending from a first longitudinal end 106 to a second, angled longitudinal end 108. The first end 106 is located proximate illuminator 100, although as discussed above, waveguide 102 can instead be optically coupled to a remote illuminator via a fiber-optic or other waveguide. Waveguide 102 has a substantially planar conformation, but can be curved or have a varying cross-sectional shape, as desired or necessary for a particular application. Waveguide 102 includes an upper surface 110, a lower surface 112, a front surface 114, and a rear surface 116. Located at the outboard location 104 of waveguide 102 is a reflecting surface or facet 118 that is used to downwardly deflect at least some of the light internally reflected off end 108. This is shown by the exemplary light rays in Fig. 7C. As discussed above in connection with Fig. 2B, the surface of end 108 can be mirrored, aluminized, painted, or otherwise coated to maximize the rearward reflection of light traveling through waveguide 102 from illuminator 100. Also, the upper and lower surfaces 110, 112 can be mirrored, aluminized, painted, or otherwise coated at the outboard location 104, as shown in Fig. 7A. Of course, any of the other surfaces or surface portions (excluding surface 106 and surface 116 at the outboard location 104) can be aluminized, painted, stippled, or otherwise treated, either in whole or in part.

If desired, the longitudinal extent of reflecting surface 118 can be shortened to decrease the amount of downwardly deflected light and increase the amount of rearwardly directed light. This is shown in Figs. 8A and 8B which depict a waveguide 120 having a longitudinally-shortened, reflecting surface 122 which permits a portion of the light reflected off longitudinal end 124 to exit the rear surface 126 without encountering reflecting surface 122. Fig. 9 depicts a second alternative embodiment of the waveguide used in Fig. 6 in which the waveguide 130 shown therein includes a slightly concave longitudinal end 132 which has the effect of fanning out the light that is reflected rearwardly off the end 132. Fig. 10 depicts a third alternative embodiment 134 which includes surface features 136 that operate as lensing elements to increase the dispersion of the light reflected off longitudinal end 138. The surface features 136 can be used to direct the light upwardly, downwardly, and/or laterally. Furthermore, these surface features 136 can be located on end 138 or on front surface 139 at a location proximate end 138. Fig. 11 depicts a fourth alternative embodiment 140 in which the downwardly directing reflecting surface 142 has a concave conformation to help spread out the light that is internally reflected downwardly off surface 142. Fig. 12 depicts yet a fifth alternative embodiment 144 in which the lower surface 145 of waveguide 144 includes surface features 146 to provide both lateral and longitudinal dispersion of the light downwardly reflected off reflecting surface 148.

### Rear/Side/Ground Illumination and Signaling from the Mirror Housing

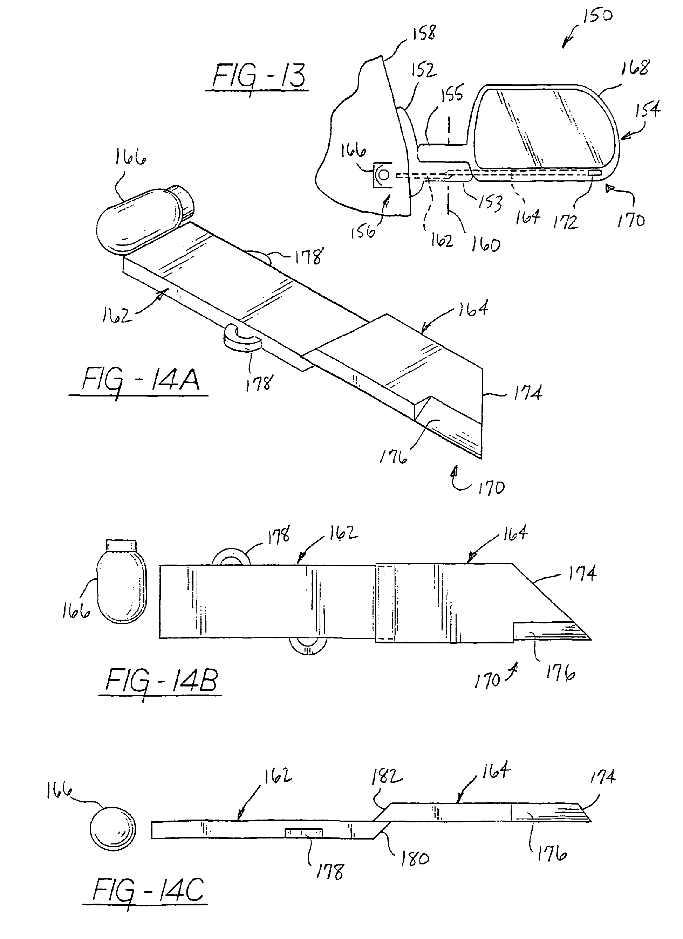

Turning now to Fig. 13, there is shown a fourth embodiment 150 of a side mirror assembly of the present invention. Side mirror assembly 150 includes an applique 152, breakaway side mirror 154, and an illumination assembly 156 that provides rearwardly directed light for illumination or signaling purposes. Applique 152 is mounted on the vehicle door panel 158 or to some other side body panel. Side mirror 154 is pivotally mounted to applique 152 such that can rotate about an axis 160. Illumination assembly 156 includes a first waveguide 162, a second waveguide 164, and an illuminator 166. Waveguide 162 extends through applique 152 from a location proximate illuminator 166 to a location proximate axis 160 where it is optically coupled to waveguide 164 which extends through the opaque housing 168 of side mirror 154 to an outboard location 170 at the lower portion of housing 168. In operation, light supplied by illuminator 166 is conducted by internal reflection through waveguide 162 and then into waveguide 164 where it is conducted by internal reflection to the outboard location 170. The light exits at the outboard location 170 through a windowed opening 172 in housing 168. Although waveguide 164 is shown extending from applique 152 into side mirror 154, it will be appreciated that waveguide 162 can be located near the upper surface of the laterally extending portion 153 of applique 152 and waveguide 164 can be located externally of applique 152 in the laterally extending portion 155 of side mirror 154. Other such configurations will become apparent to those skilled in the art.

Waveguides 162 and 164 are shown in greater detail in Figs. 14A-14D. As will be appreciated, waveguides 162 and 164 are essentially the same as the waveguide shown in Figs. 7A-7C, except that the waveguide has been separated into two pieces to permit routing of the light into mirror housing 168 while accommodating the pivoting of housing 168 about axis 160. As with the foregoing embodiments, waveguides 162 and 164 comprise generally planar transparent plastic members, with waveguide 164 having an angled longitudinal end 174 for rearwardly directing light and a reflecting surface or facet 176 for downwardly directing light at outboard location 170. For this purpose, housing 168 will also include an opening (not shown) in its lower surface to accommodate the downwardly directed light reflecting off facet 176. It will be appreciated by those skilled in the art that the various surface conformations and surface features shown in the other waveguide embodiments disclosed herein can be used to control the direction and pattern of light exiting waveguide 164 at outboard location 170. Waveguide 162 also includes a pair of unitary connecting tabs 178 for mounting of waveguide 162. Of course, these connecting tabs 178 can be utilized for mounting of any of the waveguides discussed herein.

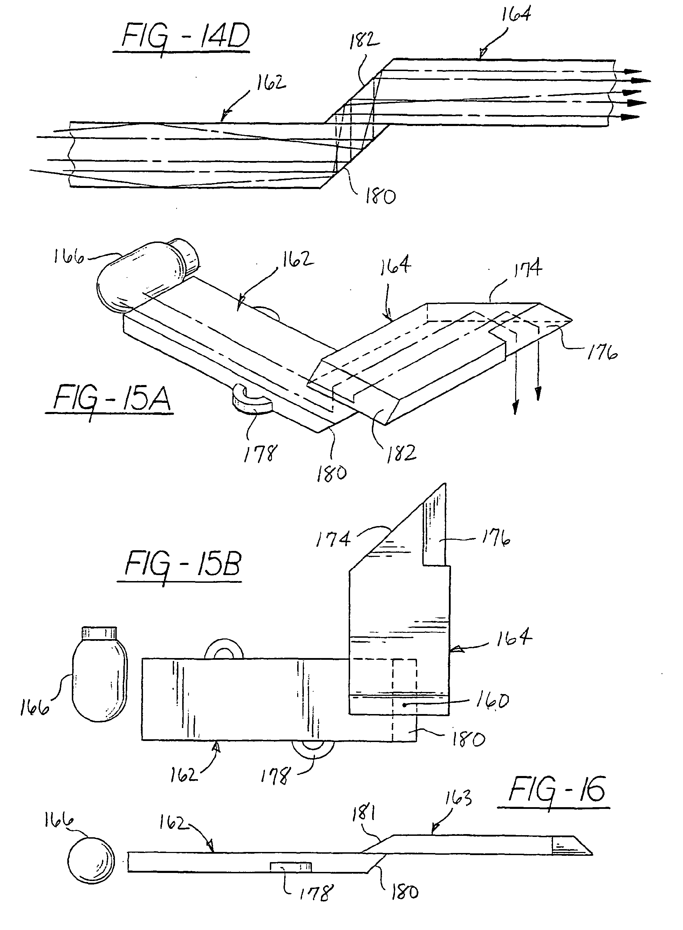

As illustrated in Fig. 14D, waveguides 162 and 164 are optically coupled together by reflecting surfaces 180 and 182, respectively. As shown, the surfaces are aligned such that light rays conducted along waveguide 162 are reflected upwardly by surface 180 out of waveguide 162 and into waveguide 164 where they are reflected toward the longitudinal direction of waveguide 164 by surface 182. Although the reflecting surfaces 180, 182 are shown at 45° in Fig. 14D, it will be appreciated that other angles and multiple facets can be used. For example, Fig. 16 shows an alternative embodiment in which waveguide 162 includes its 45° reflecting surface 180, whereas waveguide 163 has a 30° reflecting surface 181. This provides improve coupling between the waveguides, as the 30° reflecting surface helps capture all of the light rays reflected off the lower reflecting surface 180 when the two waveguides are properly aligned.

Figs. 15A and 15B show the relative positioning of waveguide 162 and 164 when waveguide 164 is rotated forwardly along with mirror housing 168 about axis 160. Since axis 160 extends vertically through reflecting surfaces 180 and 182, a portion of the surfaces remains overlapped which permits a portion of the light rays traveling through waveguide 162 to be transferred to waveguide 164. Accordingly, illumination system 156 can remain operational even when side mirror 154 is pivoted forwardly or rearwardly from its normal operational position. Excess light that is reflected out of waveguide 162 and not picked up by waveguide 164 will be directed upwardly into and captured by the opaque mirror housing 168. If desired, waveguide 162 and 164 can be located such that axis 160 does not extend through the reflecting surfaces 180, 182 nor even through the waveguides, in which case illumination system 156 will not be operational to direct light out of side mirror 154 when it is rotated by a substantial angle either forwardly or rearwardly.

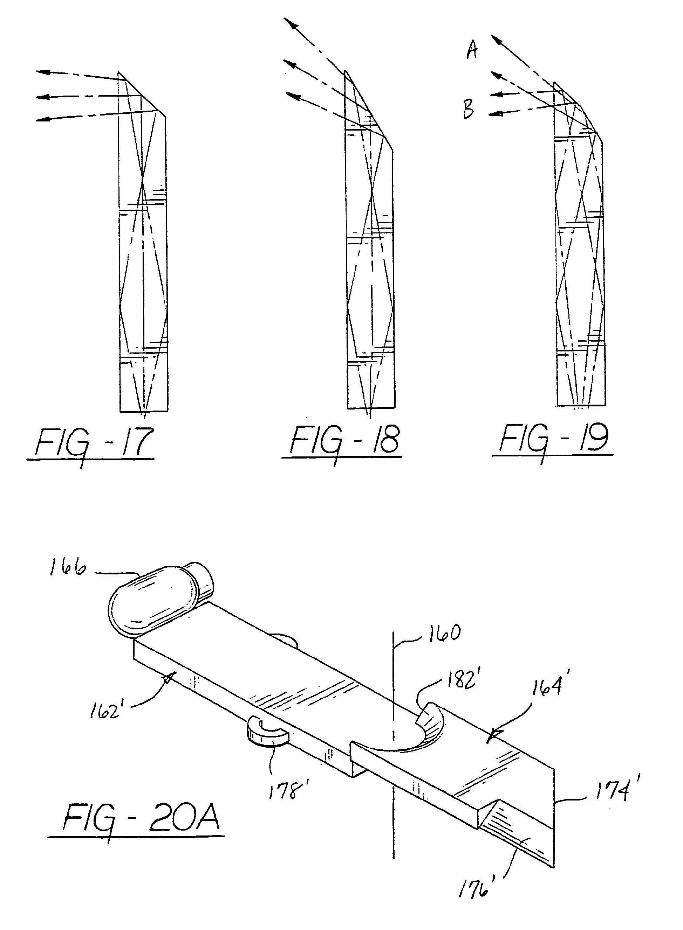

Turning now to Figs. 17-19, it will be apparent by inspection of these figures that the downward and rearward directing of light can be controlled by suitable selection of the angle and/or faceting of the end surfaces of the waveguides. The angle of the end surface determines the angle at which light exits the waveguide, as can be seen by a comparison of Figs. 17 and 18. As shown in Fig. 19, faceting of the end surface can be used to independently direct light into multiple areas, such as regions A and B.

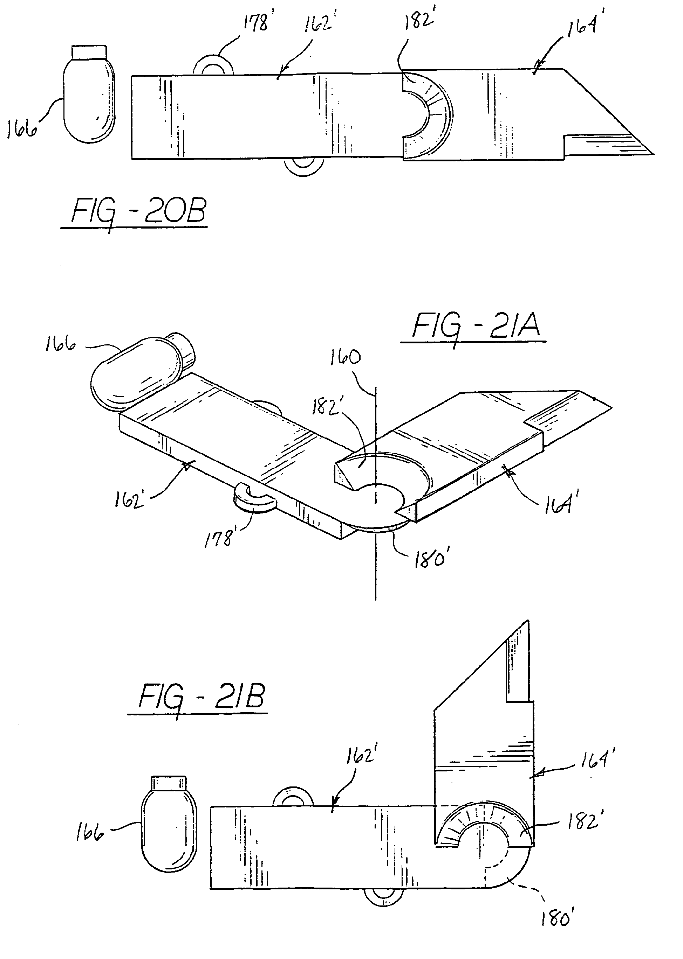

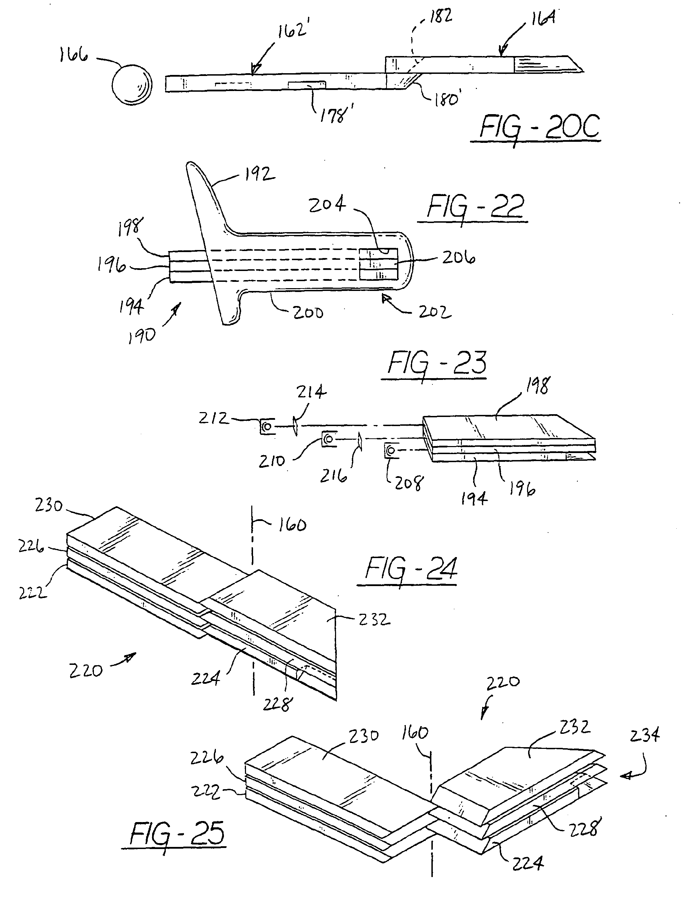

Figs. 20A-20C depict various views of an alternative embodiment of the waveguides shown in Figs. 14A-14D. The waveguides 162' and 164' are the same as waveguides 162 and 164, except in the region where they are optically coupled together. In particular, waveguides 162' and 164' include complementary, semicircular, angled reflecting surfaces 180' and 182' that are centered on axis 160. Preferably, reflecting surface 180' is disposed at an angle of approximately 45° and reflecting surface 182' is disposed at an angle of either 30° or 45°, although of course other angles could be utilized. Figs. 21A and 21B show waveguide 164' rotated forwardly relative to waveguide 162' about axis 160. As will be appreciated from the top view shown in Fig. 21B, this semicircular, angled conformation of the reflecting surfaces 180' and 182' provide substantially more overlap than the configuration of Figs. 15A-15B, thereby providing a greater portion of the light to the upper waveguide 164' when side mirror 154 is rotated from its normal operational position.

### Combined Signalling and Illumination

As shown in Fig. 22, rearward illumination, brake signaling, and turn signaling can all be integrated together into a single illumination assembly 190 that is incorporated into an applique 192. This can be accomplished using stacked waveguides of the type shown in Figs. 2A, 2B, 4, and 7A-12. Illumination assembly 190 includes a lower waveguide 194, a middle waveguide 196, and an upper waveguide 198. Preferably, lower waveguide 194 it is utilized for exterior illumination and is located at the lower surface 200 of applique 192 so that it can direct light both rearwardly and downwardly through one or more suitable openings in applique 192. Middle waveguide 196 can be used as a side-mounted turn signal and upper waveguide 198 can be used as a side-mounted brake signal. Each of these waveguides directs light outwardly from applique 192 at its outboard location 202 through a rear opening 204 having a transparent lens or window 206. As indicated in Fig. 23, the three waveguides 194, 196, and 198 can each be optically coupled to separate illuminators 208, 210, and 212, respectively. Furthermore, as mentioned above, red and amber colored filters 214 and 216, respectively, can be used to provide signals of a suitable color.

Figs. 24 and 25 show a stacked waveguide arrangement 220 that can be used in the same manner as illumination system 190 to route illumination and signal lighting through an applique (not shown) and into a side mirror housing (also not shown). In particular, illumination system 220 includes three pairs of optically coupled waveguides; namely, waveguides 222 and 224, waveguides 226 and 228, and waveguides 230 and 232. As will be appreciated, light traveling through waveguide 222 will be reflected upwardly into waveguide 224 and thereafter will exit waveguide 224 both rearwardly and downwardly at its outboard location 234. Similarly, light traveling through waveguide 226 will be reflected upwardly into waveguide 228 and light traveling through waveguide 230 will be reflected upwardly into waveguide 232. If desired, the reflecting surfaces as well as the planar surfaces of the waveguides can be aluminized or otherwise optically isolated from the adjacent waveguide pairs to prevent cross communication of light between adjacent waveguide pairs. Also, the pivot axis 160 is preferably located externally of the reflecting surfaces of the waveguides so that the waveguides 224 and 228 can be rotated about the axis 160 without interference with either waveguide 226 or 230. For example, as shown in Fig. 25, pivot axis 160 can be located so that it intersects or is located just outside the front surfaces of the waveguides near their reflecting surfaces.

### Additional Embodiment

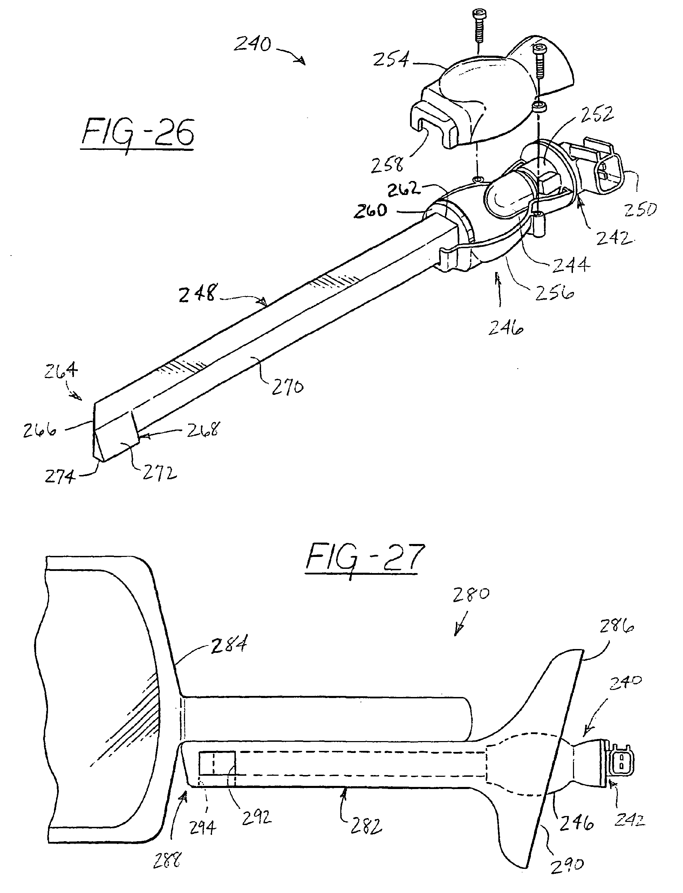

Referring now to Fig. 26, an alternative embodiment of the illumination assembly 36 is shown and designated as 240. Assembly 240 primarily includes a socket 242, an incandescent or other light source 244, a reflector housing 246, and a waveguide 248. Socket 242 can be a plastic socket having an integral electrical connector 250 and base portion 252 into which light source 244 is received. Socket 242 can be of a number of the types of sockets commonly used in automotive applications, such as are available under the trademark ZANXX™ from Federal-Mogul Corporation of Southfield, Michigan. Similarly, light source 244 can be an automotive incandescent lamp such as is available under the trademark Wagner Lighting™ from Federal-Mogul Corporation.

As shown, housing 246 comprises a two-piece housing including an upper portion 254 and a lower portion 256. As shown, lower portion 256 is integral with socket 242, although it will of course be appreciated that both portions could be separate from socket 242. Housing 246 is attached over lamp 244 and a portion of socket 242 to thereby substantially seal the lamp therein. Housing 246 can have reflective internal surfaces and an ellipsoidal or other shape to help direct light from lamp 244 into waveguide 248. Housing 246 has a rectangular exit opening 258 that is complementary in shape with the cross-sectional shape of waveguide 248. If desired or necessary, a lens or filter element 260 can be placed between the lamp 244 and waveguide 248 within housing 246 to, for example, filter the light entering the waveguide, protect the waveguide from heat, focus the light into the waveguide, or help secure the waveguide within the housing by bonding the waveguide to the element 260.

Waveguide 248 is an elongated piece of light transmissive material such as acrylic. It extends from a proximal end 262 to a distal, free end 264 that is located remote from the socket, lamp, and housing. The distal end 264 has an angled end face 266, as discussed above in connection with the waveguide of Fig. 2A. It also includes a lens 268 located along a portion of a lateral side 270 of the waveguide. This lens helps redirect light internally reflected off end face 266. In particular, lens 268 includes a rear face 272 that directs light rearwardly, as well as a lower face 274 that directs light downwardly. As will be appreciated by those skilled in the art, other suitable end configurations can be utilized, as required to achieve the output light distribution desired for a particular application.

Fig. 27 shows how the illumination assembly 240 of Fig. 26 can be incorporated into a side mirror assembly 280 that includes a mirror mount (applique) 282 and a side mirror 284. Although shown as a driver's side breakaway mirror assembly, it will be understood that, as discussed in connection with Fig. 1, mirror 284 can be mounted directly to the vehicle and either the applique or the side mirror housing can be used as a mounting member for the mirror. As shown, illumination assembly 240 is mounted within applique 282 such that the socket 242, lamp 244, and housing 246 are located at a mounting surface 286 of the applique with the distal end 264 of the waveguide being located at a remote end 288 of the applique. The mounting surface 286 defines an opening 290 into which the illumination assembly 240 extends. The illumination assembly can be mounted to the applique at this opening by attaching housing 246 and/or socket 242 to the applique.

Light exiting the housing 246 and entering waveguide 248 travels along the length of the waveguide, and thereafter exits the waveguide at the distal end 264, primarily through the rear and lower faces 272, 274 of the lens 268. The rearwardly directed light exits through a first opening 292 in the applique and the downwardly directed light exits through a second opening 294. Located in each of these openings is a sealed light transmissive window.

As shown, the illumination assembly is mounted to the applique such that they extend on both sides of the opening 290 in the mounting surface. Thus, when assembled onto a vehicle, the connector 250 of socket 242 will be located inside the door panel itself and the lamp will be located at the interface between the applique and the door, rather than in the door itself (as in other embodiments described above) or in the applique (as has been done in the prior art by others). As discussed above, this provides a number of advantages, including improved protection for the lamp from vibration and other environmental effects.

It will thus be appreciated that there has been provided in accordance with the present invention a side mirror assembly that achieves the aims and advantages specified herein. It will of course be understood that the foregoing description is directed to preferred exemplary embodiments of the invention and that the invention is not limited to the embodiments shown. Other various changes and modifications will become apparent to those skilled in the art. For example, the waveguides disclosed herein can be used to route light to a location located behind the reflective element of the side mirror, where the light can then be directed rearwardly through an (at least partially) optically transmissive portion of the reflective element. All such variations are intended to come within the scope of the appended claims.

## Claims

1. A side mirror assembly (30;70;90;150;190;280) for a vehicle, comprising:
a mounting member (32;72;92;152;192;282), having a mounting surface (286) for attachment of said mounting member to the vehicle;
a reflective element (35) attached to said mounting member at a location spaced from said mounting surface; and
a waveguide (42;82;102;162;164;196;248) contained within said mounting member and extending from a first location proximate said mounting surface to a second location 46;104;170;202 proximate said reflective element,
**characterized in that**
said waveguide (42 ;102) has a first longitudinal end face (48; 106) disposed at said first location and a second longitudinal end face (50;108;266) disposed at said second location, said second longitudinal end face being angled relative to the first so as to reflect light internally of said waveguide towards a lateral side surface (52; 116) of said waveguide so as to be ultimately emitted through at least one of said lateral side surfaces and a lower surface (112).

2. A side mirror assembly as defined in claim 1, wherein said mounting member comprises a mirror housing (37 ; 168) and wherein said reflective element (35) is mounted in said mirror housing.

3. A side mirror assembly as defined in claim 1, wherein said mounting member comprises a mirror mount (32 92;152) and wherein said side mirror assembly further comprises a housing (37;168) attached to said mirror mount, with said reflective element (35) being mounted in said housing.

4. A side mirror assembly as defined in claim 3 wherein said second location comprises an outboard location (46) within said mirror mount (32), with said mirror mount (32) including a light transmissive opening (58;58') at said outboard location, wherein light traveling through said waveguide (42) from said first location is directed out of said lateral side surface (52) of said waveguide and through said opening of said mirror mount.

5. A side mirror assembly as defined in claim 4, wherein said opening (58') is in a rearward portion of said mirror mount (32) and said angled end face (50) of said waveguide (42) is oriented to direct light laterally out of said waveguide and through said opening (58') in said rearward portion of said mirror mount.

6. A side mirror assembly as defined in claim 5, wherein said waveguide (42) includes a laterally extending portion (64) at its angled end face (50') with said laterally extending portion being located within said opening (58') of said mirror mount (32).

7. A side mirror assembly as defined in claim 6, further comprising a transparent lens (62) in said opening (58') of said mirror mount (32').

8. A side mirror assembly as defined in claim 5, wherein said angled end face (50) includes a reflective layer located thereon such that light transmitted through said waveguide (42) from said first location and impinging on said reflective layer is reflected out of said lateral side surface (52) of said waveguide (42).

9. A side mirror assembly as defined in claim 4, wherein said opening is in a downward portion of said mirror mount (72;92).

10. A side mirror assembly as defined in claim 3, further comprising a lens (84) associated with said waveguide (82) at said first location, wherein said lens has an interior surface and an exterior surface and is oriented such that light entering said lens from said interior surface is downwardly directed by said lens to thereby provide downwardly directed illumination below said mirror mount (72).

11. A side mirror assembly as defined in claim 10, wherein said lens (84) is a unitary part of said waveguide (86).

12. A side mirror assembly as defined in claim 10, wherein said mirror mount (72; 92) has a lower surface and wherein said waveguide (82;102) comprises at least a portion of said lower surface.

13. A side mirror assembly as defined in claim 12, wherein said mirror mount (92) has a lower surface having a light transmissive opening at said second location and wherein said waveguide (102) includes at least one end surface (108, 118) oriented to direct light out of said waveguide and through said opening.

14. A side mirror, assembly as defined in claim 3, wherein said waveguide (102) extends through said mirror mount (92) and into said housing.

15. A side mirror assembly according to claim 3 wherein a first waveguide (162) is provided in said mirror mount (152) and a second waveguide (164) is contained within said housing (168).

16. A side mirror assembly as defined in claim 15, wherein said second waveguide (164) extends through said housing (168) to an outboard location (170) in said housing (168).

17. A side mirror assembly as defined in claim 15, wherein said housing (168) is pivotally attached to said mirror mount (152), whereby said housing and reflective element together comprise a breakaway mirror (154).

18. A side mirror assembly as defined in any of claims 15-17 wherein said first and second waveguides (162, 164) are optically coupled together such that at least a portion of the light transmitted through said first waveguide (162) enters said second waveguide (164).

19. A side mirror according to claim 18 wherein said first and second waveguides (162, 164) each includes an end having a reflecting surface (180,182), optical coupling thereof being achieved by said reflecting surfaces.

20. A side mirror assembly as defined in claim 19 when dependent on claim 18, wherein said housing (168) pivots relative to said mirror mount (152) about a pivot axis (160 that extends though said waveguides (162, 164) at said reflective surfaces (180, 182).

21. A side mirror assembly as defined in claim 20, wherein said reflective surfaces (180'; 182') are semicircular and are centered about said pivot axis (160), whereby at least a portion of the light exiting said first waveguide (162') is received by said second waveguide (164') when said housing (168) is pivoted rearwardly about said pivot axis.

22. A side mirror assembly as defined in claim 21, wherein said reflecting surface (180) of said first waveguide (162) has a different angle than said reflecting surface (182) of said second waveguide (164).

23. A side mirror assembly as defined in claim 22, wherein said reflecting surface (180) of said first waveguide (162) has an angle of approximately thirty degrees and said reflecting surface (182) of said second waveguide (164) has an angle of approximately forty-five degrees.

24. A side mirror assembly as defined in claim 1, wherein said waveguide (102) includes an end face (108) located at said second location, said end having at least one facet (118) oriented to direct light downwardly from said mounting member (92) at said second location to cause at least some light emission through said lower surface (112).

25. A side mirror assembly as defined in claim 24, wherein said facet (118) is located on a lateral side surface (116) of said waveguide (102).

26. A side mirror assembly as defined in claim 24, wherein said end includes at least one curved surface (132, 142).

27. A side mirror assembly as defined in claim 24, wherein said end includes one or more lensing elements (136, 146).

28. A side mirror assembly (30;70;90) as defined in claim 1 further comprising an illuminator (44;80;100) located externally of said mounting member (32; 72; 92), said illuminator being optically coupled to said waveguide (42; 82; 102) at said first location.

29. A side mirror assembly (280) as defined in claim 1, further comprising an illuminator (244 located at said mounting surface (286) of said mounting member (282).

30. A side mirror assembly (280) as defined in claim 29, wherein said waveguide (248) is attached to said illuminator (244) and said illuminator is mounted to said mounting member (282) proximate said mounting surface (286).

31. A side mirror assembly as defined in claim 29, wherein said mounting surface (286) defines an opening in said mounting member (282) and wherein said illuminator (244) extends through said opening on either side of said opening such that, when said mounting surface is attached to a door panel, a portion of said illuminator is located within the door panel.

32. A side mirror assembly (190) as defined in claim 1, further comprising a second elongated waveguide (194) that extends through said mounting member (192) adjacent said first waveguide (196) , wherein light traveling through said second waveguide from a location proximate said first location is directed out of said second waveguide and out of said mounting member through an opening (204) located proximate said second location (202).

33. A side mirror assembly as defined in claim 32, wherein said first waveguide (196) is stacked on top of said second waveguide (194).

34. A side mirror assembly as defined in claim 33, wherein said second waveguide (194) includes an end located at said second location (202), said end having at least one facet oriented to direct light downwardly from said mounting member (192) at said second location.

35. A side mirror assembly as defined in claim 32, further comprising a third waveguide (198) that extends through said mounting member (192) adjacent said first and second waveguides (196,194).

36. A side mirror assembly as defined in claim 32, wherein:
said mounting member comprises a mirror mount and wherein said side mirror assembly further comprises a housing attached to said mirror mount, with said reflective element being mounted in said housing;
said first and second waveguides (222, 226) comprise a first set of waveguides,
said side mirror assembly further comprises a second set of waveguides (224, 228),
wherein said second set includes a third waveguide (224) optically coupled to said first waveguide (222) and a fourth waveguide (228) optically coupled to said second waveguide (226), said second set of waveguides being supported by said housing, whereby light entering any of said first set of waveguides at said first location is transmitted to an associated waveguide in said second set at and thereby to said second location (234).

37. A side mirror assembly as defined in claim 36, wherein said housing is pivotally attached to said mounting member with said second set of waveguides being pivotal relative to said first set of waveguides.

## Patentansprüche

1. Seitenspiegelanordnung (30, 70, 90, 150,190, 280) für ein Fahrzeug, umfassend:
ein Befestigungselement (32, 72, 92, 152, 192, 282) mit einer Befestigungsoberfläche (286) zum Anbringen des Befestigungselements an das Fahrzeug,
ein reflektierendes Element (35), das an dem Befestigungselement an einem Platz angeordnet ist, der von der Befestigungsoberfläche entfernt vorliegt, und
einen Wellenleiter (42, 82, 102, 162, 164, 196, 248), der in dem Befestigungselement vorliegt und sich von einem der Befestigungsoberfläche benachbarten ersten Ort zu einem dem reflektierenden Element benachbarten zweiten Ort (46, 104, 170, 202) erstreckt,
**dadurch gekennzeichnet, dass**
der Wellenleiter (42, 102) eine an dem ersten Ort angeordnete erste längliche Endfläche (48, 106) und eine an dem zweiten Ort angeordnete zweite längliche Endfläche (50, 108, 266) aufweist, wobei die zweite längliche Endfläche zu der ersten relativ angewinkelt ist, um so Licht innerhalb des Wellenleiters in Richtung einer lateralen Seitenoberfläche (52, 116) des Wellenleiters zu reflektieren, so dass das Licht letztendlich durch mindestens eine der lateralen Seitenoberflächen und einer unteren Oberfläche (112) emittiert wird.

2. Seitenspiegelanordnung nach Anspruch 1, worin das Befestigungselement ein Spiegelgehäuse (37, 168) umfasst und worin das reflektierende Element (35) in dem Spiegelgehäuse angebracht ist.

3. Seitenspiegelanordnung nach Anspruch 1, worin das Befestigungselement eine Spiegelbefestigung (32, 37, 152) umfasst und worin die Seitenspiegelanordnung weiter ein an der Spiegelbefestigung angebrachtes Gehäuse (37, 168) umfasst, wobei das reflektierende Element (35) in dem Gehäuse angebracht ist.

4. Seitenspiegelanordnung nach Anspruch 3, worin der zweite Ort einen Außenort (46) innerhalb der Spiegelbefestigung (32) umfasst, wobei die Spiegelbefestigung (32) eine lichtdurchlässige Öffnung (58, 58') an dem Außenort beinhaltet, wobei Licht, das von dem ersten Ort durch den Wellenleiter (42) wandert, aus der lateralen Seitenoberfläche (52) des Wellenleiters und durch die Öffnung der Spiegelbefestigung geleitet wird.

5. Seitenspiegelanordnung nach Anspruch 4, worin sich die Öffnung (58') in einem rückwärtigen Bereich der Spiegelbefestigung (32) befindet, und worin die angewinkelte Endfläche (50) des Wellenleiters (42) ausgerichtet ist, Licht lateral aus dem Wellenleiter heraus und durch die Öffnung (58') in dem rückwärtigen Bereich der Spiegelbefestigung zu leiten.

6. Seitenspiegelanordnung nach Anspruch 5, worin der Wellenleiter (42) einen sich lateral erstreckenden Bereich (64) an seiner angewinkelten Endfläche (50') beinhaltet, wobei der sich lateral erstreckende Bereich innerhalb der Öffnung (58') der Spiegelbefestigung (32) befindet.

7. Seitenspiegelanordnung nach Anspruch 6, weiter umfassend eine transparente Linse (62) in der Öffnung (58') der Spiegelbefestigung (32').

8. Seitenspiegelanordnung nach Anspruch 5, worin die angewinkelte Seitenendfläche (50) eine darauf angebrachte reflektierende Schicht beinhaltet, so dass Licht, das von dem ersten Ort durch den Wellenleiter (42) übertragen wird und auf die reflektierende Schicht prallt, aus der lateralen Seitenoberfläche (52) des Wellenleiters (42) heraus reflektiert wird.

9. Seitenspiegelanordnung nach Anspruch 4, worin sich die Öffnung in einem unteren Bereich der Spiegelbefestigung (72, 92) befindet.

10. Seitenspiegelanordnung nach Anspruch 3, weiter umfassend eine mit dem Wellenleiter (82) an dem ersten Ort assoziierte Linse (84), wobei die Linse eine innere Oberfläche und eine äußere Oberfläche aufweist und so angeordnet ist, dass das von der inneren Oberfläche in die Linse eintretende Licht durch die Linse nach unten gerichtet wird, um **dadurch** eine nach unten gerichtete Beleuchtung unterhalb der Spiegelbefestigung (72) bereitzustellen.

11. Seitenspiegelanordnung nach Anspruch 10, worin die Linse (84) ein unitäres Teil des Wellenleiters (86) ist.

12. Seitenspiegelanordnung nach Anspruch 10, worin die Spiegelbefestigung (72, 92) eine untere Oberfläche aufweist und worin der Wellenleiter (82, 102) mindestens einen Bereich der unteren Oberfläche umfasst.

13. Seitenspiegelanordnung nach Anspruch 12, worin die Spiegelbefestigung (92) eine untere Oberfläche mit einer lichtdurchlässigen Öffnung an dem zweiten Ort aufweist, und worin der Wellenleiter (102) mindestens eine Endoberfläche (108, 118) beinhaltet, die ausgerichtet ist, um Licht aus dem Wellenleiter heraus und durch die Öffnung zu leiten.

14. Seitenspiegelanordnung nach Anspruch 3, worin sich der Wellenleiter (102) durch die Spiegelbefestigung (92) und in das Gehäuse erstreckt.

15. Seitenspiegelanordnung nach Anspruch 3, worin ein erster Wellenleiter (162) in der Spiegelbefestigung (152) bereitgestellt ist und ein zweiter Wellenleiter (164) in dem Gehäuse (168) angeordnet vorliegt.

16. Seitenspiegelanordnung nach Anspruch 15, worin sich der zweite Wellenleiter (164) durch das Gehäuse (168) bis zu einem äußeren Ort (170) in dem Gehäuse (168) erstreckt.

17. Seitenspiegelanordnung nach Anspruch 15, worin das Gehäuse (168) drehbar an der Spiegelbefestigung (152) angebracht ist, wobei das Gehäuse und das reflektierende Element zusammen einen Abreißspiegel (154) umfassen.

18. Seitenspiegelanordnung nach einem der Ansprüche 15-17, worin der erste und zweite Wellenleiter (162, 164) optisch miteinander verbunden sind, so dass mindestens ein Teil des durch den ersten Wellenleiter (162) übertragenen Lichts in den zweiten Wellenleiter (164) eintritt.

19. Seitenspiegelanordnung nach Anspruch 18, worin der erste und zweite Wellenleiter (162, 164) je ein Ende beinhalten, das eine reflektierende Oberfläche (180, 182) aufweist, wobei optische Verbindung durch die reflektierenden Oberflächen erreicht wird.

20. Seitenspiegelanordnung nach Anspruch 19 wenn abhängig von Anspruch 18, worin das Gehäuse (168) relativ zu der Spiegelbefestigung (152) um eine Drehachse (160) dreht, die sich durch die Wellenleiter (162, 164) an den reflektierenden Oberflächen (180, 182) erstreckt.

21. Seitenspiegelanordnung nach Anspruch 20, worin die reflektierenden Oberflächen (180', 182') halbkreisartig und um die Drehachse (160) zentriert sind, wobei mindestens ein Teil des den ersten Wellenleiter (162') anregenden Lichts durch den zweiten Wellenleiter (164') aufgenommen wird, wenn das Gehäuse (168) rückwärtig um die Drehachse gedreht wird.

22. Seitenspiegelanordnung nach Anspruch 21, worin die reflektierende Oberfläche (180) des ersten Wellenleiters (162) einen anderen Winkel aufweist als die reflektierende Oberfläche (182) des zweiten Wellenleiters (164).

23. Seitenspiegelanordnung nach Anspruch 22, worin die reflektierende Oberfläche (180) des ersten Wellenleiters (162) einen Winkel von ungefähr 30 Grad und die reflektierende Oberfläche (182) des zweiten Wellenleiters (164) einen Winkel von ungefähr 45 Grad aufweist.

24. Seitenspiegelanordnung nach Anspruch 1, worin der Wellenleiter (102) eine an dem zweiten Ort befindliche Endfläche (108) beinhaltet, wobei das Ende mindestens eine Facette (118) aufweist, die ausgerichtet ist, Licht von dem Befestigungselement (92) an dem zweiten Ort nach unten zu leiten, um mindestens etwas Lichtemission an der unteren Oberfläche (112) zu erwirken.

25. Seitenspiegelanordnung nach Anspruch 24, worin sich die Facette (118) an einer lateralen Seitenoberfläche (116) des Wellenleiters (102) befindet.

26. Seitenspiegelanordnung nach Anspruch 24, worin das Ende mindestens eine gekrümmte Oberfläche (132, 142) beinhaltet.

27. Seitenspiegelanordnung nach Anspruch 24, worin das Ende mindestens ein oder mehrere Linsenelemente (136, 146) beinhaltet.

28. Seitenspiegelanordnung (30, 70, 90) nach Anspruch 1, weiter umfassend einen Beleuchter (44, 80, 100), der sich außerhalb des Befestigungselements (32, 72, 92) befindet, wobei der Beleuchter an dem ersten Ort mit dem Wellenleiter (42, 82, 102) optisch verbunden ist.

29. Seitenspiegelanordnung (280) nach Anspruch 1, weiter umfassend einen Beleuchter (244), der sich an der Befestigungsoberfläche (286) des Befestigungselements (282) befindet.

30. Seitenspiegelanordnung (280) nach Anspruch 29, worin der Wellenleiter (248) an dem Beleuchter (244) angebracht ist und worin der Beleuchter an dem Befestigungselement (282), benachbart der Befestigungsoberfläche (286), befestigt ist.

31. Seitenspiegelanordnung nach Anspruch 29, worin die Befestigungsoberfläche (286) eine Öffnung in dem Befestigungselement (282) definiert und worin sich der Beleuchter (244) durch die Öffnung auf jeder Seite der Öffnung erstreckt, so dass sich ein Teil des Beleuchters innerhalb einer Türverkleidung befindet, wenn die Befestigungsoberfläche an der Türverkleidung angeordnet ist.

32. Seitenspiegelanordnung (190) nach Anspruch 1, weiter umfassend einen zweiten länglichen Wellenleiter (194), der sich angrenzend an den ersten Wellenleiter (196) durch das Befestigungselement (192) erstreckt, wobei Licht, das von einem dem ersten Ort benachbarten Ort durch den zweiten Wellenleiter wandert, aus dem zweiten Wellenleiter und aus dem Befestigungselement durch eine Öffnung (204) herausgeleitet wird, die dem zweiten Ort (202) benachbart ist.

33. Seitenspiegelanordnung nach Anspruch 32, worin der erste Wellenleiter (196) über dem zweiten Wellenleiter (194) angeordnet ist.

34. Seitenspiegelanordnung nach Anspruch 33, worin der zweite Wellenleiter (194) ein an dem zweiten Ort (202) befindliches Ende beinhaltet, wobei das Ende mindestens eine Facette aufweist, die ausgerichtet ist, Licht an dem zweiten Ort von dem Befestigungselement (192) nach unten zu leiten.

35. Seitenspiegelanordnung nach Anspruch 32, weiter umfassend einen dritten Wellenleiter (198), der sich durch das Befestigungselement (192) angrenzend an den ersten und zweiten Wellenleiter (196, 194) erstreckt.

36. Seitenspiegelanordnung nach Anspruch 32, worin:
das Befestigungselement eine Spiegelbefestigung umfasst und worin die Seitenspiegelanordnung weiter ein an der Spiegelbefestigung angebrachtes Gehäuse umfasst, wobei das reflektierende Element in dem Gehäuse befestigt ist,
der erste und zweite Wellenleiter (222, 226) einen ersten Satz Wellenleiter umfassen, wobei die Seitenspiegelanordnung weiter einen zweiten Satz Wellenleiter (224, 228) umfasst, wobei der zweite Satz einen mit dem ersten Wellenleiter (222) optisch verbundenen dritten Wellenleiter (224) und einen mit dem zweiten Wellenleiter (226) optisch verbundenen vierten Wellenleiter (228) umfasst, wobei der zweite Satz Wellenleiter durch das Gehäuse gestützt wird, wobei Licht, das an dem ersten Ort in einen aus dem ersten Satz von Wellenleitern eintritt, an einen assoziierten Wellenleiter in dem zweiten Satz und somit an den zweiten Ort (234) übertragen wird.

37. Seitenspiegelanordnung nach Anspruch 36, worin das Gehäuse an dem Befestigungselement drehbar angebracht ist, wobei der zweite Satz Wellenleiter zu dem ersten Satz Wellenleiter relativ drehbar ist.

## Revendications

1. Ensemble (30 ; 70 ; 90 ; 150 ; 190 ; 280) de rétroviseur latéral pour un véhicule, comprenant :
un organe de montage (32 ; 72 ; 92 ; 152 ; 192 ; 282), ayant une surface de montage (286) pour fixer ledit organe de montage au véhicule ;
un élément réfléchissant (35) fixé audit organe de montage au niveau d'un emplacement éloigné de ladite surface de montage ; et
un guide d'ondes (42 ; 82 ; 102 ; 162 ; 164 ; 196 ; 248) contenu dans ledit organe de montage et s'étendant d'un premier emplacement proche de ladite surface de montage jusqu'à un deuxième emplacement (46 ; 104 ; 170 ; 202) proche dudit élément réfléchissant,
**caractérisé en ce que**
ledit guide d'ondes (42 ; 102) a une première face extrême longitudinale (48 ; 106) disposée au niveau dudit premier emplacement et une deuxième face extrême longitudinale (50 ; 108 ; 266) disposée au niveau dudit deuxième emplacement, ladite deuxième face extrême longitudinale étant inclinée par rapport à la première de sorte à réfléchir la lumière à l'intérieur dudit guide d'ondes vers une surface (52 ; 116) côté latéral dudit guide d'ondes de sorte à être finalement émise à travers au moins l'une desdites surfaces côté latéral et une surface inférieure (112).

2. Ensemble de rétroviseur latéral selon la revendication 1, dans lequel ledit organe de montage comprend un boîtier (37 ; 168) de rétroviseur et où ledit élément réfléchissant (35) est monté dans ledit boîtier de rétroviseur.

3. Ensemble de rétroviseur latéral selon la revendication 1, dans lequel ledit organe de montage comprend une monture (32 ; 92 ; 152) de rétroviseur et où ledit ensemble de rétroviseur latéral comprend en plus un boîtier (37 ; 168) fixé à ladite monture de rétroviseur, ledit élément réfléchissant (35) étant monté dans ledit boîtier.

4. Ensemble de rétroviseur latéral selon la revendication 3, dans lequel ledit deuxième emplacement comprend un emplacement extérieur (46) dans ladite monture (32) de rétroviseur, ladite monture (32) de rétroviseur comportant une ouverture (58 ; 58') de transmission de lumière au niveau dudit emplacement extérieur, où la lumière passant à travers ledit guide d'ondes (42) dudit premier emplacement est dirigée en dehors de ladite surface (52) côté latéral dudit guide d'ondes et à travers ladite ouverture de ladite monture de rétroviseur.

5. Ensemble de rétroviseur latéral selon la revendication 4, dans lequel ladite ouverture (58') est située dans une partie arrière de ladite monture (32) de rétroviseur et ladite face (50) extrême inclinée dudit guide d'ondes (42) est orientée pour diriger la lumière latéralement en dehors dudit guide d'ondes et à travers ladite ouverture (58') dans ladite partie arrière de ladite monture de rétroviseur.

6. Ensemble de rétroviseur latéral selon la revendication 5, dans lequel ledit guide d'ondes (42) comporte une partie (64) s'étendant latéralement au niveau de sa face (50') extrême inclinée, ladite partie s'étendant latéralement étant située dans ladite ouverture (58') de ladite monture (32) de rétroviseur.

7. Ensemble de rétroviseur latéral selon la revendication 6, comprenant en plus une lentille transparente (62) dans ladite ouverture (58') de ladite monture (32') de rétroviseur.

8. Ensemble de rétroviseur latéral selon la revendication 5, dans lequel une couche réfléchissante est positionnée sur ladite face (50) extrême inclinée de sorte que la lumière transmise à travers le guide d'ondes (42) dudit premier emplacement et qui vient toucher ladite couche réfléchissante est réfléchie hors de ladite surface (52) côté latéral dudit guide d'ondes (42).

9. Ensemble de rétroviseur latéral selon la revendication 4, dans lequel ladite ouverture se situe dans une partie vers le bas de ladite monture (72 ; 92) de rétroviseur.

10. Ensemble de rétroviseur latéral selon la revendication 3, comprenant en plus une lentille (84) associée audit guide d'ondes (82) au niveau dudit premier emplacement, où ladite lentille a une surface interne et une surface externe et est orientée de sorte que la lumière entrant dans ladite lentille de ladite surface interne est dirigée vers le bas par ladite lentille afin de procurer par ce moyen un éclairage dirigé vers le bas sous ladite monture (72) de rétroviseur.

11. Ensemble de rétroviseur latéral selon la revendication 10, dans lequel ladite lentille (84) fait partie intégrante dudit guide d'ondes (86).

12. Ensemble de rétroviseur latéral selon la revendication 10, dans lequel ladite monture (72 ; 92) de rétroviseur a une surface inférieure et où ledit guide d'ondes (82 ; 102) comprend au moins une partie de ladite surface inférieure.

13. Ensemble de rétroviseur latéral selon la revendication 12, dans lequel ladite monture (92) de rétroviseur a une surface inférieure ayant une ouverture de transmission de lumière au niveau dudit deuxième emplacement et où ledit guide d'ondes (102) comporte au moins une surface (108 ; 118) extrême orientée pour diriger la lumière hors dudit guide d'ondes et à travers ladite ouverture.

14. Ensemble de rétroviseur latéral selon la revendication 3, dans lequel ledit guide d'ondes (102) s'étend à travers ladite monture (92) de rétroviseur et à l'intérieur dudit boîtier.

15. Ensemble de rétroviseur latéral selon la revendication 3, dans lequel un premier guide d'ondes (162) est prévu dans ladite monture (152) de rétroviseur et un deuxième guide d'ondes (164) est contenu dans ledit boîtier (168) .

16. Ensemble de rétroviseur latéral selon la revendication 15, dans lequel ledit deuxième guide d'ondes (164) s'étend à travers ledit boîtier (168) vers un emplacement extérieur (170) dans ledit boîtier (168).

17. Ensemble de rétroviseur latéral selon la revendication 15, dans lequel ledit boîtier (168) est fixé en pivotement à ladite monture (152) de rétroviseur, moyennant quoi ledit boîtier et ledit élément réfléchissant comprennent un rétroviseur séparable (154).

18. Ensemble de rétroviseur latéral selon l'une des revendications 15-17, dans lequel lesdits premier et deuxième guides d'ondes (162, 164) sont couplés de manière optique de sorte qu'une partie au moins de la lumière transmise à travers ledit premier guide d'ondes (162) rentre dans ledit deuxième guide d'ondes (164).

19. Ensemble de rétroviseur latéral selon la revendication 18, dans lequel chacun desdits premier et deuxième guides d'ondes (162, 164) comporte une extrémité ayant une surface réfléchissante (180, 182), leur couplage optique étant réalisé par lesdites surfaces réfléchissantes.

20. Ensemble de rétroviseur latéral selon la revendication 19, lorsqu'elle dépend de la revendication 18, dans lequel ledit boîtier (168) pivote par rapport à ladite monture (152) de rétroviseur autour d'un axe pivot (160) qui s'étend à travers lesdits guides d'ondes (162, 164) au niveau desdites surfaces réfléchissantes (180, 182).

21. Ensemble de rétroviseur latéral selon la revendication 20, dans lequel lesdites surfaces réfléchissantes (180', 182') sont semi-circulaires et sont centrées autour dudit axe pivot (160), moyennant quoi au moins une partie de la lumière sortant dudit premier guide d'ondes (162') est reçue par ledit deuxième guide d'ondes (164') lorsque ledit boîtier (168) est pivoté vers l'arrière autour dudit axe pivot.

22. Ensemble de rétroviseur latéral selon la revendication 21, dans lequel ladite surface réfléchissante (180) dudit premier guide d'ondes (162) a un angle différent de celui de ladite surface réfléchissante (182) dudit deuxième guide d'ondes (164).

23. Ensemble de rétroviseur latéral selon la revendication 22, dans lequel ladite surface réfléchissante (180) dudit premier guide d'ondes (162) a un angle d'environ trente degrés et ladite surface réfléchissante (182) dudit deuxième guide d'ondes (164) a un angle d'environ quarante-cinq degrés.

24. Ensemble de rétroviseur latéral selon la revendication 1, dans lequel ledit guide d'ondes (102) comporte une face (108) extrême située au niveau dudit deuxième emplacement, ladite extrémité ayant au moins une facette (118) orientée pour diriger la lumière vers le bas dudit organe de montage (92) au niveau dudit deuxième emplacement pour permettre une certaine émission de lumière au moins vers ladite surface inférieure (112).

25. Ensemble de rétroviseur latéral selon la revendication 24, dans lequel ladite facette (118) est située sur une surface (116) côté latéral dudit guide d'ondes (102).

26. Ensemble de rétroviseur latéral selon la revendication 24, dans lequel ladite extrémité comporte une surface incurvée (132, 142) au moins.

27. Ensemble de rétroviseur latéral selon la revendication 24, dans lequel ladite extrémité comporte un ou plusieurs éléments lenticulaires (136, 146).

28. Ensemble (30 ; 70 ; 90) de rétroviseur latéral selon la revendication 1, comprenant en plus un illuminateur (44 ; 80 ; 100) situé à l'extérieur dudit organe de montage (32 ; 72 ; 92), ledit illuminateur étant optiquement couplé audit guide d'ondes (42 ; 82 ; 102) au niveau dudit premier emplacement.

29. Ensemble (280) de rétroviseur latéral selon la revendication 1, comprenant en plus un illuminateur (244) situé au niveau de ladite surface de montage (286) dudit organe de montage (282).

30. Ensemble (280) de rétroviseur latéral selon la revendication 29, dans lequel ledit guide d'ondes (248) est fixé audit illuminateur (244) et ledit illuminateur est monté audit organe de montage (282) à proximité de ladite surface de montage (286).

31. Ensemble de rétroviseur latéral selon la revendication 29, dans lequel ladite surface de montage (286) définit une ouverture dans ledit organe de montage (282) et où ledit illuminateur (244) s'étend à travers ladite ouverture de part et d'autre de ladite ouverture de sorte que, lorsque ladite surface de montage est fixée à un panneau de portière, une partie dudit illuminateur est située dans le panneau de portière.

32. Ensemble (190) de rétroviseur latéral selon la revendication 1, comprenant en plus un deuxième guide d'ondes allongé (194) qui s'étend à travers ledit organe de montage (192) adjacent audit premier guide d'ondes (196), où la lumière passant à travers ledit deuxième guide d'ondes d'un emplacement proche dudit premier emplacement est dirigée hors dudit deuxième guide d'ondes et hors dudit organe de montage à travers une ouverture (204) située à proximité dudit deuxième emplacement (202).

33. Ensemble de rétroviseur latéral selon la revendication 32, dans lequel ledit premier guide d'ondes (196) est empilé par dessus la partie supérieure dudit deuxième guide d'ondes (194).

34. Ensemble de rétroviseur latéral selon la revendication 33, dans lequel ledit deuxième guide d'ondes (194) comporte une extrémité située au niveau dudit deuxième emplacement (202), ladite extrémité ayant une facette au moins orientée pour diriger la lumière vers le bas dudit organe de montage (192) au niveau dudit deuxième emplacement.

35. Ensemble de rétroviseur latéral selon la revendication 32, comprenant en plus un troisième guide d'ondes (198) qui s'étend à travers ledit organe de montage (192) adjacent auxdits premier et deuxième guides d'ondes (196 ; 194).

36. Ensemble de rétroviseur latéral selon la revendication 32, dans lequel :
ledit organe de montage comprend une monture de rétroviseur et où ledit ensemble de rétroviseur latéral comprend en plus un boîtier fixé à ladite monture de rétroviseur, ledit élément réfléchissant étant monté dans ledit boîtier ;
lesdits premier et deuxième guides d'ondes (222, 226) comprennent un premier ensemble de guides d'ondes, ledit ensemble de rétroviseur latéral comprend en plus un deuxième ensemble de guides d'ondes (224, 228), où ledit deuxième ensemble comporte un troisième guide d'ondes (224) optiquement couplé audit premier guide d'ondes (222) et un quatrième guide d'ondes (228) optiquement couplé audit deuxième guide d'ondes (226), ledit deuxième ensemble de guides d'ondes étant soutenu par ledit boîtier, moyennant quoi la lumière rentrant dans l'un dudit premier ensemble de guides d'ondes au niveau dudit premier emplacement est transmise à un guide d'ondes associé dans ledit deuxième ensemble et ainsi au niveau dudit deuxième emplacement (234).

37. Ensemble de rétroviseur latéral selon la revendication 36, dans lequel ledit boîtier est fixé en pivotement audit organe de montage, ledit deuxième ensemble de guides d'ondes étant pivotant par rapport audit premier ensemble de guides d'ondes.
